# EUROPÄISCHE PATENTSCHRIFT

(11) **EP 0 492 204 B1**
(45) Date of publication and mention of the grant of the patent: **10.08.1994**
(21) Application number: 91120902.1
(22) Date of filing: 05.12.1991
(51) Int. Cl.: B05B 7/14, A01M 9/00

(54) **Container for manual spraying of a powder**
Behälter zum manuellen Zerstäuben von pulverförmigen Substanzen
Récipient pour la pulvérisation manuelle de poudres

(30) Priority: 21.12.1990 DE 19904041286
(43) Date of publication of application: 01.07.1992
(73) Proprietor: CELAFLOR GmbH & Co. KG, D-55218 Ingelheim (DE)
(72) Inventor: Ziegler, Arthur, Dr., W-6553 Kirschroth (DE)
(74) Representative: Patentanwälte Beetz - Timpe - Siegfried Schmitt-Fumian - Mayr

(56) References cited:
- US-4 730 751
- US-4 307 823

## Description

Die Erfindung betrifft einen, z.B. aus der US-A-4 307 823 bekannten, Behälter zum manuellen Zerstäuben von insbesondere pulverförmigen Substanzen der im Oberbegriff des Anspruchs 1 angegebenen Gattung.

Derartige Behälter werden bevorzugt in Haushalten, Gärtnereien und anderen Kleinbetrieben zum feinverteilten Aufbringen von z. B. pulverförmigen Düngemitteln und/oder Insektiziden auf Pflanzen und Beete eingesetzt. Problematisch ist dabei die genaue Dosierung der aus dem Behälter durch wiederholten Handdruck herausgeförderten Pulvermenge und insbesondere die sichere Erzielung eines optimalen Zerstäubungseffektes. Gerade bei hochwirksamen Substanzen kommt dem Zerstäubungsgrad des ausgetriebenen Pulvers eine besondere Bedeutung zu, weil eine durch Strahlbildung verursachte ungleichmäßige Ablagerung der Substanzen auf dem Untergrund zu unerwünschten Überreaktionen und auch zu einem zu hohen Verbrauch an kostspieligen Wirkstoffen führen können. Ferner ergibt sich bei bekannten Zerstäubungsbehältern häufig die nachteilige Wirkung, daß die pulverförmigen Substanzen nicht ausreichend gezielt zerstäubt werden, so daß in der Umgebungsluft schwebende Partikel z. B. von der Bedienungsperson eingeatmet werden können oder sich auf deren Bekleidung ablagern. Ein anderer wichtiger Aspekt liegt darin, die Behälter vor und nach der Benutzung dicht und sicher geschlossen zu halten, um Veränderungen der Wirkstoffeigenschaften und der pulverförmigen Konsistenz des Behälterinhalts durch eingedrungene Umgebungsluft und Feuchte zu verhindern.

Aufgabe der Erfindung ist es, die bei einem gattungsgemäßen Behälter auftretenden Nachteile zu vermindern und mit technisch einfachen Mitteln einen wesentlich verbesserten Zerstäubungseffekt für Substanzen von verschiedenartiger Konsistenz zu erzielen.

Diese Aufgabe wird durch die im Patentanspruch 1 angegebenen Merkmale gelöst. Durch das Vorsehen der bogenförmigen Nuten in zumindest einer Behälterwand ergeben sich besondere elastische Verformungseigenschaften des Behälters. Wenn ein Benutzer die mit den Nuten versehene Behälterseite mit einer Hand umgreift und die daran angrenzenden Seitenwandbereiche periodisch zusammendrückt, werden im Behälterinneren schnell wechselnde intensive Druckimpulse erzeugt, welche das Pulver auflockern und in eine ungerichtete Wirbelbewegung versetzen. In der vor der Zerstäuberdüse angeordneten zylindrischen oder konischen Wirbelkammer erfolgt eine Ausrichtung der tangential einströmenden Fluidgemische in einen zur Düse hin gerichteten Spiralwirbel, so daß das Gemisch mit einem Drall in Form einer örtlich begrenzten "Wolke" aus der Zerstäuberdüse feinstverteilt austritt.

Um diesen Effekt insbesondere bei Feinstpulver optimal auszunutzen, ist es besonders zweckmäßig, die wellenförmigen Quernuten in einer bogenförmigen Stirnwand parallel zueinander auszubilden und die in der oberen Endwand des Behälters vorgesehene Zerstäuberdüse in der Mittelachse dieser bogenförmigen Stirnwand anzuordnen.

Zur bequemen Handhabung des Behälters während des Transports und des Zerstäubungsbetriebs sind seine Abmessungen und seine Form entsprechend gewählt, wobei im hinteren schmaleren Behälterteil eine Durchgriffsöffnung vorgesehen ist, die einen Einhandgriff bildet.

Um eine ausreichend lange Lagerhaltung ohne Beeinflussung des Behälterinhalts zu gewährleisten, ist der Behälter zweckmäßig als einstückiges Spritzgußteil aus einem geeigneten Kunststoff ausgebildet, wobei die Zerstäuberdüse von einem angeformten Auslaßstutzen umgeben sein kann, an dessen Seitenwand ein mit einem Verschlußstopfen für die Zerstäuberdüse versehener Klappdeckel gelenkig befestigt ist. Im geschlossenen Zustand sitzt dieser Klappdeckel dicht im verrasteten Klemmsitz in dem Auslaßstutzen, wobei der Verschlußstopfen gegen bzw. in die Zerstäuberdüse gedrückt wird und diese zusätzlich verschließt.

Nach längerer aufrechter Lagerung des Behälters können die im inneren Teil seines Innenraums befindlichen Feststoffpartikel durch Gravitation verfestigt sein. Um diesen auch bei Flüssigkeitssuspensionen, wie z. B. Farben, auftretenden Sedimentationseffekt aufzuheben, ist gemäß einer zweckmäßigen Ausgestaltung der Erfindung zumindest ein Teil des Behälterbodens abgerundet ausgeführt und mit wellenförmigen Quernuten versehen sein.

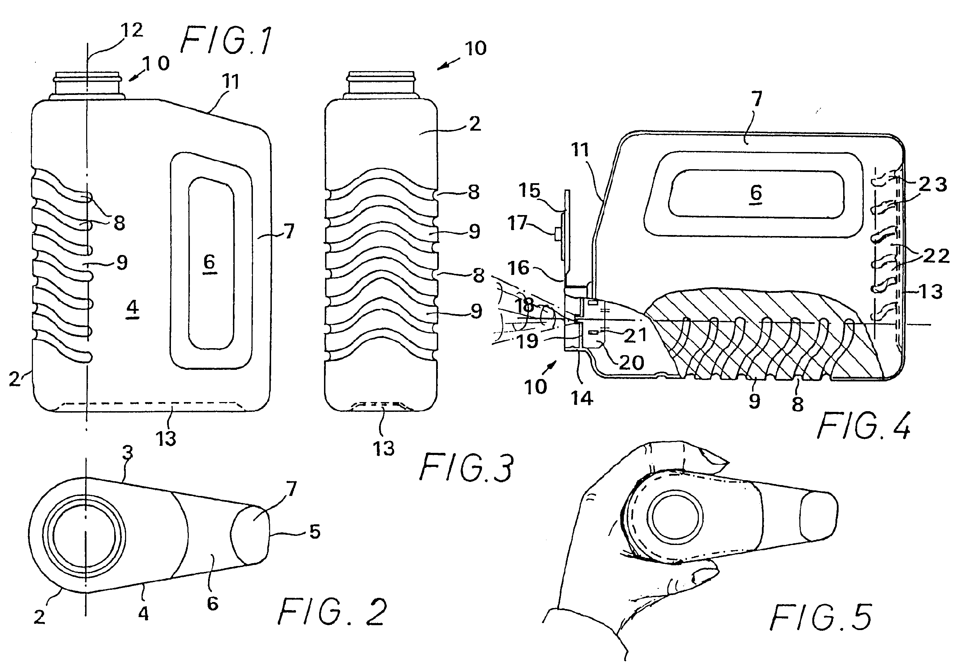

Weitere Besonderheiten und Vorzüge des erfindungsgemäßen Zerstäubungsbehälters lassen sich der Zeichnung und der folgenden Beschreibung eines bevorzugten Ausführungsbeispiels entnehmen. Es zeigen:
- Fig. 1: einen Zerstäubungs-Behälter in Seitenansicht;
- Fig. 2: den Behälter nach Fig. 1 in Draufsicht;
- Fig. 3: den Behälter nach Fig. 1 in Stirnansicht;
- Fig. 4: den in die Horizontale gekippten Behälter nach Fig. 1 bei geöffnetem Deckel;
- Fig. 5: den Behälter während eines Zerstäubungsvorgangs.
Der dargestellte Behälter hat ein Volumen zwischen 0,5 und 3 l, vorzugszweise zwischen 0,8 und 2 I. Wie aus Fig. 2 ersichtlich, ist die vordere Stirnwand 2 des Behälters 1 halbzylindrisch ausgebildet und geht in zwei ebene Seitenwände 3, 4 über, die schräg aufeinander zulaufen und durch eine hintere schmalere Stirnwand 5 miteinander verbunden sind. Im hinteren Bereich des Behälters befindet sich eine Durchgriffsöffnung 6, durch die ein hohler Handgriff 7 gebildet wird. In der vorderen Stirnwand 2 sind insgesamt sieben wellenförmige Quernuten 8 parallel übereinander angeordnet, die durch gleich breite Querrippen 9 voneinander getrennt sind. Die Quernuten 8 und die Rippen 9 haben eine wellenförmig geschwungene Form, wobei - wie aus Fig. 1 und 3 ersichtlich - ihr Mittelbogen zum Behälterauslaß 10 hin verläuft und die beiden Endabschnitte etwa horizontal ausgerichtet sind. Die obere Endwand 11 des Behälters weist einen horizontalen Vorderabschnitt auf, in welchem der Behälterauslaß 10 in der Mittelachse 12 der halbzylindrischen Stirnwand 2 angeordnet ist. Bei der Ausführung nach Fig. 1 bis 3 besitzt der Behälterboden eine Einsenkung 13.

Wie aus Fig. 4 ersichtlich, umfaßt der Behälterauslaß 10 einen zylindrischen Auslaßstutzen 14, an dessen rückwärtiger Wandung ein Deckel 15 mittels z. B. eines Kunststoffscharniers 16 angelenkt ist. Ein an diesem Klappdeckel 15 angeformter Verschlußstopfen 17 dient zum Abdichten einer Zerstäuberdüse 18, die in einer im Auslaßstutzen 14 ausgebildeten Querwand 19 ausgebildet ist. Im Inneren des Behälters befindet sich unmittelbar vor der Zerstäuberdüse 18 eine Wirbelkammer 20, in deren Wandung seitliche Einlaßschlitze 21 ausgebildet sind.

Bei der in Fig. 4 dargestellten Ausführung ist der mittlere Abschnitt 22 des Bodens 13 halbzylindrisch ausgeführt und in diesem Mittelteil ist eine Reihe von weiteren Quernuten 23 ausgeführt.

Um ein im Behälter enthaltenes Pulver durch die Zerstäuberdüse 18 feinverteilt auszutreiben, wird der dargestellte Behälter mit einer Hand am Handgriff 7 gehalten. Mit der anderen Hand umgreift der Benutzer die bogenförmige Stirnwand 2 (vgl. Fig. 5) oder bei der Ausführung nach Fig. 4 den bogenförmigen Mittelbereich des Bodens 13 und übt auf die Behälterseitenwände periodisch kurze Handdrücke aus. Dadurch erfolgt eine wechselnde elastische Verformung der Behälterwände, durch die im Behälterinneren Druckimpulse in wechselnder Folge erzeugt werden. Als Folge dieser Druckimpulse wird das gesamte im Behälter befindliche Material aufgelockert und zusammen mit der darin befindlichen Luft in eine ungerichtete Wirbelströmung versetzt. Das Pulver-Luft-Gemisch strömt über die seitliche Einlaßschlitze 21 in die Wirbelkammer 20 ein und wird in Form eines Spiralwirbels zur Zerstäuberdüse 18 hin ausgerichtet. Nach Austritt aus der Zerstäuberdüse 18 erfolgt die Ausbreitung des Gemisches in einem relativ breiten Kegel aufgrund des in der Wirbelkammer erzeugten Dralls. Aufgrund der Anordnung und Ausbildung der Quernuten ist der intensive Zerstäubungseffekt unabhängig von der Füllmenge des Behälters, so daß auch bei fast leerem Behälter die Restmenge mit dem gleichen Zerstäubungsgrad ausgetrieben wird.

Der dargestellte Behälter besteht vorzugsweise aus einem geeigneten Kunststoff, wobei die Wandstärke der oberen Endwand zumindest im Bereich der Auslaßöffnung 10 größer als die der Stirn- oder Seitenwände sein sollte. Die Wandstärke des Behälters im Bereich der Quernuten und Rippen ist konstant, d. h. es existieren praktisch keine Verdickungen. Die Anzahl der Quernuten 8 und Rippen sollte zweckmäßig zwischen 4 und 15, vorzugsweise zwischen 6 und 12 liegen und die Wandstärke zwischen 0,5 und 4,0 mm, vorzugsweise zwischen 1,0 und 3,0 mm, betragen.

Die Erfindung ist nicht auf die dargestellte Ausführungsform beschränkt. So können die Behälter auch andere Außenkonturen besitzen, wobei jedoch zumindest eine Behälterwand von der Hand eines Benutzers umgriffen werden und mit Profilierungen versehen sein sollte, die durch periodisch ausgeübte Fingerdrücke intensive Druckimpulse im Behälterinneren erzeugen. Ferner können statt pulverförmiger Substanzen auch Flüssigkeitsgemische durch einen erfindungsgemäß ausgebildeten Behälter zerstäubt und dosiert werden.

## Claims

1. A container for the manual spraying of, in particular powdery substances, such as pulverulent fertilizers and plant protection agents, consisting of sides that are deformable under a pressure effect and a spraying nozzle,
**characterized in that**
inside the container, a swirl chamber (20) with lateral inlet slots (21) is arranged directly ahead of the spraying nozzle (18) and
that in at least one arcuate container side (2, 13) there are formed wave-shaped transverse grooves (8; 23).

2. A container according to claim 1,
**characterized in that**
the spraying nozzle (18) formed in the top end (10) of the container is arranged in the axis (12) of the arcuate end side (2).

3. A container according to claim 1 or 2,
**characterized in that**
the approximately semicircular end side (2) having the transverse grooves (8) is wider than the rear end side (5) which forms a handle (7) together with the rear end portions of the slanted sides (3, 4).

4. A container according to one of claims 1 to 3,
**characterized in that**
the transverse grooves (8) are bent in their median zone towards the spraying nozzle (18) and that the two end portions of each transverse groove are orientated approximately parallel to the bottom (13).

5. A container according to one of claims 1 to 4,
**characterized in that**
four to fifteen wave-shaped transverse grooves (8) are arranged parallel next to each other in the front side (2).

6. A container according to one of claims 1 to 5,
**characterized in that**
the spraying nozzle (18) is surrounded by an outlet collar (14) at whose side there is articulated a hinged lid (15) which is provided with a closing stopper (17) for the spraying nozzle (18).

7. A container according to one of claims 1 to 6,
**characterized in that**
the wall thickness of the top end (11) is greater in the zone of the container outlet (10) than the wall thickness of the sides (2, 3, 4).

8. A container according to one of claims 1 to 7,
**characterized in that**
the transverse grooves (25) are arranged in a rounded zone (22) of the bottom (13).

## Patentansprüche

1. Behälter zum manuellen Zerstäuben von insbesondere pulverförmigen Substanzen, wie pulvrigen Dünge- und Pflanzenschutz-Mitteln, bestehend aus unter Druckeinwirkung elastisch verformbaren Seitenwänden und einer Zerstäuberdüse,
**dadurch gekennzeichnet,**
**daß** im Behälterinneren unmittelbar vor der Zerstäuberdüse (18) eine Wirbelkammer (20) mit seitlichen Einlaßschlitzen (21) angeordnet ist und
**daß** zumindest in einer bogenförmigen Behälterwand (2, 13) wellenförmige Quernuten (8; 23) ausgebildet sind.

2. Behälter nach Anspruch 1,
**dadurch gekennzeichnet,**
**daß** die in der oberen Endwand (10) des Behälters ausgebildete Zerstäuberdüse (18) in der Achse (12) der bogenförmigen Stirnwand (2) angeordnet ist.

3. Behälter nach Anspruch 1 oder 2,
**dadurch gekennzeichnet,**
**daß** die die Quernuten (8) aufweisende etwa halbkreisförmige Stirnwand (2) breiter als die hintere Stirnwand (5) ist, welche zusammen mit den hinteren Endteilen der schrägen Seitenwände (3, 4) einen Handgriff (7) bildet.

4. Behälter nach einem der Ansprüche 1 bis 3,
**dadurch gekennzeichnet,**
**daß** die Quernuten (8) in ihrem mittleren Bereich in Richtung der Zerstäuberdüse (18) gebogen sind und die beiden Endteile jeder Quernut etwa parallel zur Bodenwand (13) ausgerichtet sind.

5. Behälter nach einem der Ansprüche 1 bis 4,
**dadurch gekennzeichnet,**
**daß** in der vorderen Stirnwand (2) vier bis fünfzehn wellenförmige Quernuten (8) parallel nebeneinander angeordnet sind.

6. Behälter nach einem der Ansprüche 1 bis 5,
**dadurch gekennzeichnet,**
**daß** die Zerstäuberdüse (18) von einem Auslaßstutzen (14) umgeben ist, an dessen Seitenwand ein mit einem Verschlußstopfen (17) für die Zerstäuberdüse (18) versehener Klappdeckel (15) angelenkt ist.

7. Behälter nach einem der Ansprüche 1 bis 6,
**dadurch gekennzeichnet,**
**daß** die Wandstärke der oberen Endwand (11) im Bereich des Behälterauslasses (10) größer als die Wandstärke der Seitenwände (2, 3, 4) ist.

8. Behälter nach einem der Ansprüche 1 bis 7,
**dadurch gekennzeichnet,**
**daß** Quernuten (23) in einem abgerundeten Bereich (22) der Bodenwand (13) angeordnet sind.

## Revendications

1. Récipient de pulvérisation manuelle, en particulier de substances pulvérulentes, telles que des substances pulvérulentes fertilisantes et de protection de plantes, se composant de cloisons latérales déformables élastiquement sous l'effet d'une pression, ainsi que d'une buse de pulvérisation, **caractérisé en ce qu'**une chambre de tourbillonnement (20) comportant des fentes latérales d'admission (21) est disposée à l'intérieur du récipient, immédiatement devant la buse de pulvérisation (18), et **en ce qu'**au moins une cloison arquée du récipient (2, 13) comporte des rainures transversales ondulées (8 ; 23).

2. Récipient selon la revendication 1, **caractérisé en ce que** la buse de pulvérisation (18) qui est réalisée dans la cloison supérieure (10) du récipient est disposée dans l'axe (12) de la cloison extrême arquée (2).

3. Récipient selon la revendication 1 ou 2, **caractérisé en ce que** la cloison extrême à peu près semicirculaire (2), qui comporte les rainures transversales (8), est plus large que la cloison extrême arrière (5) qui forme une poignée (7) avec les parties extrêmes arrière des cloisons latérales obliques (3, 4).

4. Récipient selon l'une des revendications 1 à 3, **caractérisé en ce que** les rainures transversales (8) sont coudées dans la partie médiane vers la buse de pulvérisation (18) et les deux extrémités de chaque rainure transversale sont orientées à peu près parallèlement à la cloison du fond (13)

5. Récipient selon l'une des revendications 1 à 4, **caractérisé en ce que** la cloison extrême antérieure (2) comporte quatre à quinze rainures transversales ondulées (8) qui sont juxtaposées parallèlement.

6. Récipient selon l'une des revendications 1 à 5, **caractérisé en ce que** la buse de pulvérisation (18) est entourée d'une tubulure de sortie (14) sur la cloison latérale de laquelle est articulé un couvercle rabattable (15) qui est muni d'un bouchon (17) d'obturation de la buse de pulvérisation (18).

7. Récipient selon l'une des revendications 1 à 6, **caractérisé en ce que** l'épaisseur de la cloison supérieure (11) est plus grande que l'épaisseur des parois latérales (2, 3, 4) dans la région de la sortie (10) du récipient.

8. Récipient selon l'une des revendications 1 à 7, **caractérisé en ce que** des rainures transversales (23) sont disposées dans une partie arrondie (22) de la cloison du fond (13).
